# EUROPÄISCHE PATENTSCHRIFT

(11) **EP 0 562 336 B1**
(45) Veröffentlichungstag und Bekanntmachung des Hinweises auf die Patenterteilung: **17.05.2000**
(21) Anmeldenummer: 93103629.7
(22) Anmeldetag: 06.03.1993
(51) Int. Cl.: G02C 7/06, G02C 7/02

(54) **Brillenlinse**
Spectacle lens
Lentille de lunettes

(30) Priorität: 27.03.1992 DE 4210008
(43) Veröffentlichungstag der Anmeldung: 29.09.1993
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Kelch, Gerhard, W-7080 Aalen (DE); Lahres, Hans, W-7080 Aalen-Wasseralfingen (DE); Wietschorke, Helmut, W-7080 Aalen-Wasseralfingen (DE)

(56) Entgegenhaltungen:
- EP-A- 0 039 497
- EP-A- 0 039 498
- WO-A-86/01308
- DE-A- 2 002 474
- US-A- 3 722 986
- US-A- 3 910 691
- US-A- 5 083 859

## Beschreibung

Die Erfindung betrifft eine Brillenlinse mit einer Rezeptfläche und einer Mehrstärkenfläche.

Brillenlinsen unterteilen sich in solche mit einem Brechwert und solche mit mehreren, aber zumindest zwei unterschiedlichen Brechwerten. Die unterschiedlichen Brechwerte der letzteren Brillenlinse dienen dazu, dem Betrachter ein einwandfreies Sehen zumindest im Nah- und Fernbereich zu ermöglichen.

Die Mehrstärkenfläche dieser Brillenlinsen ist dabei die Fläche, die unterschiedliche Brechwerte in verschiedenen Bereichen der Linse erzeugt und dadurch ein einwandfreies Sehen für Ferne, Nähe und evtl. auch Zwischenbereiche ermöglicht. Sie kann als Bifokal-, Trifokal- oder Gleitsichtfläche ausgebildet sein.

Die Rezeptfläche ist die zu dieser Mehrstärkenfläche so angepaßte gegenüberliegende Fläche, daß die Brillenlinse an den Bezugspunkten die erforderlichen dioptrischen Wirkungen erreicht. Dioptrische Wirkung ist der Sammelbegriff für sphärische, astigmatische und prismatische Wirkung für eine bestimmte Strahlrichtung in einem bestimmten Punkt auf der Brillenlinse (insbesondere Bezugspunkt Fernteil bzw. Nahteil).

Als Beispiel für derartige Brillenlinsen seien die Gleitsichtlinsen aus der DE-PS 30 16 935, DE-PS 40 12 609 und der DE AS 20 44 639 genannt. In der Zeitschrift DOZ, Nr. 11 vom 20.11.1980, sind auf den Seiten 20-23 weitere Gleitsichtlinsen beschrieben.

Die Eignung einer Brillenlinse für einen bestimmten Brillenträger ist abhängig von der individuellen Gebrauchssituation. Diese entsteht aus den individuellen Gebrauchsbedingungen, als da sind dioptrische Wirkung, Hornhautscheitelabstand, Objektentfernungen, Vorneigung der Fassung, usw..

In der DE-PS 18 05 561 ist eine ophthalmische Linse mit starker Brechkraft und vorgegebener astigmatischer Wirkung mit einer ersten Fläche beschrieben, welche kugelförmig oder torisch ist und welche eine zweite Fläche besitzt, die bezüglich Bildfeldkrümmung und Abweichungen des Astigmatismus von der Konstanz korrigiert ist. Durch die aufgestellten Symmetrieforderungen ist es bei dieser Linse nicht möglich, zusätzlich individuelle Gebrauchsbedingungen zu berücksichtigen, da die dafür notwendigen Freiheitsgrade nicht mehr vorhanden sind.

Aus der WO 86/01308 ist eine progressive Brillenlinse bekannt, bei der die Mehrstärkenfläche so ausgebildet ist, daß der Hauptteil des Flächenastigmatismus in einen Bereich ohne Wirkungsanstieg verlagert ist. Dieser Flächenastigmatismus wird durch die asphärische Rezeptfläche kompensiert. Die hier verwendete Mehrstärkenfläche liefert jedoch zusammen mit einer sphärischen oder torischen Rezepfläche keine brauchbare Brillenlinse.

Die fertige Brillenlinse entsteht im Fertigungsprozeß durch Aufbringen einer für die geforderte dioptrische Wirkung benötigten sphärischen oder torischen Rezeptfläche auf ein sogenanntes Halbfabrikat, das bereits die Mehrstärkenfläche trägt. Diese Mehrstärkenfläche ist so konzipiert, daß für eine bestimmte durchschnittliche Gebrauchssituation in Verbindung mit einer dazu passenden sphärischen oder torischen Rezeptfläche die Bildfehler für den Brillenträger über die gesamte Linse dem gewünschten 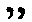 Design" entsprechen. Die Verteilung der mittleren Wirkung und der astigmatischen Abweichung und/oder der horizontalen bzw. vertikalen prismatischen Wirkung und/oder der Verzeichnung bezeichnet man als 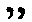 Design" der Mehrstärkenfläche. Diese Verteilungen in der durchschnittlichen Gebrauchssituation sollen im folgenden als optimierter Ausgangsfall bezeichnet werden.

Aus Kostengründen wird dieses Halbfabrikat für einen breiten Bereich von Gebrauchssituationen eingesetzt. Um die dioptrische Wirkung für den jeweiligen Brillenträger zu erreichen, wird eine individuelle sphärische oder torische Rezeptfläche auf das Halbfabrikat aufgebracht. Dadurch werden in der Regel die nutzbaren Bereiche für die Sicht in die Ferne, für die Sicht in die Zwischenentfernungen und für die Sicht in die Nähe eingeschränkt.

Es ist die Aufgabe der Erfindung, eine Brillenlinse und ein zugehöriges Herstellverfahren zu schaffen, welche bei Verwendung eines Halbfabrikates mit der bereits vorgefertigten Mehrstärkenfläche diese Einschränkungen nicht aufweist.

Diese Aufgabe wird erfindungsgemäß durch eine Brillenlinse mit den Merkmalen des Anspruches 1 und ein Herstellverfahren nach Anspruch 6 gelöst. Vorteilhafte Ausführungsformen ergeben sich aus den Merkmalen der abhängigen Ansprüche.

Durch die Erfindung können alle Brillenträger im Gegensatz zum Stand der Technik mit optimal korrigierten Linsen versorgt werden. Bei diesen Linsen erfolgt dabei die Anpassung an die individuelle Gebrauchssituation des jeweiligen Brillenträgers flächig, anstatt wie bisher nur im Fern- und Nahbezugspunkt.

Gemäß dem kennzeichnenden Teil des ersten Anspruchs ist die Rezeptfläche nach der Bearbeitung nun eine allgemeine asphärische Fläche und grenzt sich damit ganz deutlich von den bisher bekannten sphärischen bzw. torischen Rezeptflächen ab. Diese so gestaltete Rezeptfläche ist auch keine Gleitsichtfläche, da die beabsichtigte Zunahme des Brechwertes für den Nahbereich bereits von der auf dem Halbfabrikat vorhandenen Mehrstärkenfläche erzeugt wird. Die Rezeptfläche dient ausschließlich zur Erzeugung der dioptrischen Wirkung in den Bezugspunkten und zur Beseitigung von Bildfehlerzuwächsen.

Diese Bildfehlerzuwächse ergeben sich zwangsläufig dadurch, daß bei der Bestimmung der Mehrstärkenfläche eine durchschnittliche Gebrauchssituation zugrundegelegt wurde, welche von der späteren realen individuellen Gebrauchssituation in der Regel mehr oder weniger abweicht. Die Verteilung der mittleren Wirkung und der astigmatischen Abweichung und/oder der horizontalen bzw. vertikalen prismatischen Wirkung und/oder der Verzeichnung bezeichnet man als "Design" der Mehrstärkenfläche. Diese Verteilungen in der durchschnittlichen Gebrauchssituation sollen im folgenden als optimierter Ausgangsfall bezeichnet werden. Die Bildfehlerverteilung in der durchschnittlichen Gebrauchssituation bei der Bestimmung der Mehrstärkenfläche soll im folgenden als optimierter Ausgangsfall bezeichnet werden.

Dabei können folgende individuelle Gebrauchsbedingungen einzeln oder in Kombination bei der Ermittlung der Rezeptfläche zusätzlich zur dioptrischen Wirkung der Berechnung zugrundegelegt werden:
1. Hornhautscheitelabstand
2. Objektentfernungen
3. Vorneigung der Fassung
4. Fassungsform:
   Sind Fassungsform und Zentrierung bekannt, so können die geforderten prismatischen Wirkungen so auf das rechte und linke Glas verteilt werden, daß günstige Dicken- und Gewichtsverhältnisse entstehen. Für diese ermittelten Dicken kann dann die Optimierung durchgeführt werden. Außerdem läßt sich bei bekannter Fassungsform eine dafür spezielle optimale Verteilung der Bildfehler erreichen (Fehler werden in die abgeschnittenen Teile verschoben).
5. Durchbiegung:
   Auch Brillengläser aus Halbfabrikaten mit unüblichen Durchbiegungen lassen sich optimieren, z.B. bei Anisometropien zum Angleichen des Aussehens oder bei Aniseikonien.
6. Leicht unterschiedliche Refraktionswerte für Achse und Zylinder im Fern- und Nahbereich eines Gleitsichtglases.

Die neuen Brillenlinsen zeichnen sich dadurch aus, daß die Abbildungsqualität der Linsen auch bei extremen Abweichungen der realen von den durchschnittlichen Gebrauchsbedingungen erhalten bleibt (d.h. minimale Bildfehler auftreten), ohne daß für jeden einzelnen Benutzer eine individuelle Mehrstärkenfläche benötigt wird. Die Korrekturen auf der Rezeptfläche, die dazu notwendig sind, lassen sich mit numerisch gesteuerten Maschinen fertigen. Der Aufwand und die Kosten dafür sind geringer, als wenn man die Gleitsicht- oder Mehrstärkenfläche neu berechnen und eigens anfertigen würde.

Außerdem kann mit Hilfe der Erfindung der Verwendungsbereich eines Halbfabrikates deutlich erweitert werden; z.B. kann für eine bestimmte Gebrauchssituation ein Halbfabrikat mit einer dafür unüblichen Durchbiegung eingesetzt werden (bei Aniseikonie oder bei Durchbiegungsangleich für starke Anisometropie).

Für die individuelle Gebrauchssituation läßt sich also für jedes Halbfabrikat eine erfindungsgemäße Rückfläche berechnen, die eine Bildfehlerverteilung erzeugt, die dem optimierten Ausgangsfall entspricht.

Die Erfindung wird im folgenden anhand der beiden Ausführungsbeispiele für Gleitsichtlinsen in den Fig. 1-9c der beigefügten Zeichnungen näher erläutert.

Im einzelnen zeigen:
- Fig. 1: Pfeilhöhen der Vorderfläche einer Gleitsicht-Brillenlinse, die den Berechnungen für die Figuren 3a-5c zugrunde liegen;
- Fig. 2: einen Vertikalschnitt durch ein System Brillenlinse - Auge;
- Fig. 3a: die astigmatische Abweichung eines optimierten Ausgangsfalles bei Sphäre 5.00 dpt und Addition 2.50 dpt mit der Vorderfläche aus Fig. 1 und einer sphärischen Rückfläche bei einem ersten Beispiel;
- Fig. 3b: die sphärische Abweichung des optimierten Ausgangsfalles gemäß Fig. 3a,
- Fig. 4a: die astigmatische Abweichung bei einer Brillenlinse mit der Vorderfläche aus Fig. 1 und einer torischen Rückfläche für sph 2.00 dpt, cyl 4.00 dpt bei Achse 60° und einem Rezeptprisma 2.00 cm/m mit Basis 270° gemäßt dem Stand der Technik;
- Fig. 4b: die sphärische Abweichung bei der Brillenlinse gemäß Fig. 4a;
- Fig. 5a: eine Pfeilhöhendarstellung, welche die Abweichungen einer erfindungsgemäßen Rückfläche von der torischen Rückfläche gemäß Fig. 4 zeigt;
- Fig. 5b: die astigmatische Abweichung bei der Brillenlinse mit der Vorderfläche aus Fig. 1 und der Rückfläche gemäß Fig. 5a;
- Fig. 5c: die sphärische Abweichung bei der Brillenlinse gemäß Fig. 5a;
- Fig. 6: Pfeilhöhen der Vorderfläche einer Gleitsicht-Brillenlinse, die den Berechnungen für die Figuren 7a-9c zugrunde liegt;
- Fig. 7a: die astigmatische Abweichung einer Brillenlinse mit Sphäre 0,0 dpt und Addition 2.50 dpt mit der Vorderfläche aus Fig. 6 und einer sphärischen Rückflache bei einem zweiten Beispiel (optimierter Ausgangsfall).
- Fig. 7b: die sphärische Abweichung der Brillenlinse gemäß Fig. 7a;
- Fig. 8a: die astigmatische Abweichung bei einer Brillenlinse mit der Vorderfläche aus Fig. 6 und einer sphärischen Rückfläche für sph 0.00 dpt und einem Rezeptprisma 6.00 cm/m mit Basis 0° gemäß dem Stand der Technik;
- Fig. 8b: die sphärische Abweichung der Brillenlinse gemäß Fig. 8a;
- Fig. 9a: eine Pfeilhöhendarstellung, welche die Abweichung einer erfindungsgemäßen Rückfläche von der sphärischen Rückfläche gemäß Fig. 8 zeigt;
- Fig. 9b: die astigmatische Abweichung der Brillenlinse mit der Vorderfläche aus Fig. 6 und der Rückfläche gemäß Fig. 9a;
- Fig. 9c: die sphärische Abweichung der Brillenlinse gemäß Fig. 9b.

In beiden folgenden Beispielen ist die Gleitsichtfläche die objektseitige Fläche (Vorderfläche) und die Rezeptfläche die augenseitige Fläche (Rückfläche) der Brillenlinse. Für diese Beispiele wurden die sphärische und die astigmatische Abweichung in Dpt als die wesentlichen Bildfehler angesehen. Alle sonstigen Zahlenangaben sind in mm.

Diese Bildfehler sind hier folgendermaßen definiert: Für den Brillenträger ergibt sich beim Blick durch die Brillenlinse eine vom jeweiligen Durchblickspunkt abhängige dioptrische Wirkung der Brillenlinse. Diese stimmt i.a. nur am Bezugspunkt mit den Refraktionswerten überein. Der Unterschied der mittleren Wirkung (sph + cyl/2) im Durchblickspunkt zum entsprechenden Sollwert aus der Refraktion heißt im folgenden sphärische Abweichung. Die Differenz der astigmatischen Wirkung im Durchblickspunkt zum entsprechenden Sollwert aus der Refraktion unter Berücksichtigung der Achslage wird im folgenden astigmatische Abweichung genannt.

Alle Linsen der beiden Beispiele haben die Brechzahl 1.604 und zusätzlich zum jeweiligen Rezeptprisma ein Dickenreduktionsprisma 1.50 cm/m mit Basis 270°.

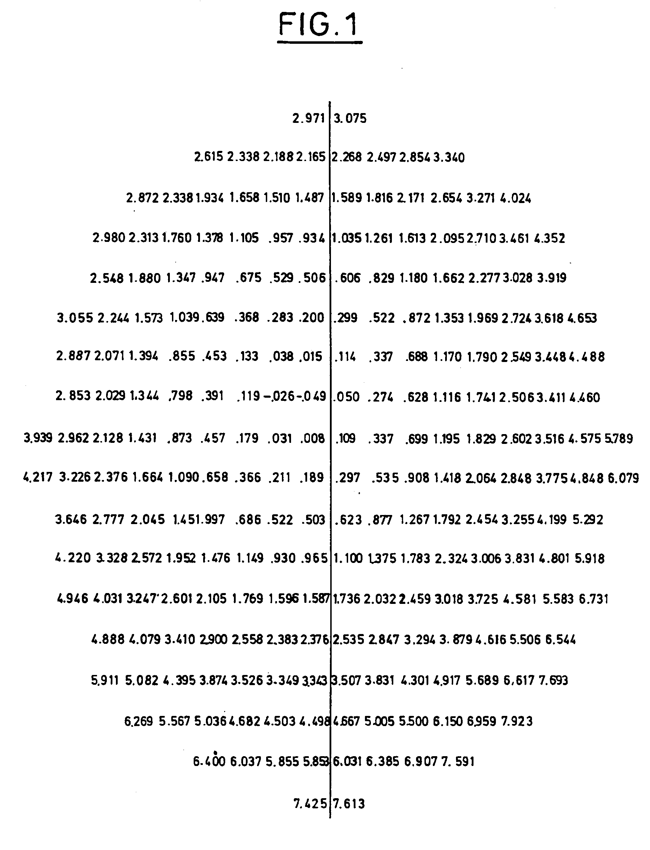

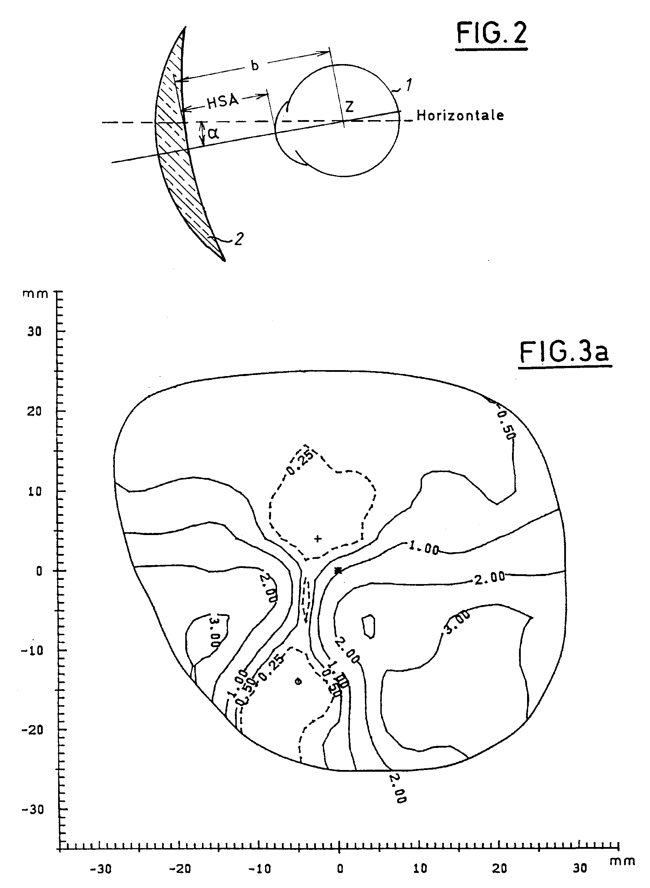

In der Fig. 1 ist eine Pfeilhöhendarstellung der Gleitsichtvorderfläche angegeben, welche im ersten Beispiel (Fig. 3a-5c) verwendet wird. Der Punktabstand in dieser Pfeilhöhentabelle, wie auch in aller nachfolgenden Pfeilhöhentabellen, beträgt 3.0 mm und der Glasdurchmesser 51.0 mm.

In Fig. 2 ist mit (1) ein schematisch dargestelltes Auge (1) bezeichnet, dessen optischer Drehpunkt die Bezeichnung (Z) trägt. Die Zeichnung skizziert die Seitenansicht des Systems Brillenlinse (2) - Auge (1) bei einer Vorneigung der Fassungsebene uni den Winkel α. Mit HSA ist der Hornhautscheitelabstand und mit (b) der Drehpunkt-Scheitelabstand auf der um den Winkel α gegenüber der Horizontalen geneigten Strecke bezeichnet.

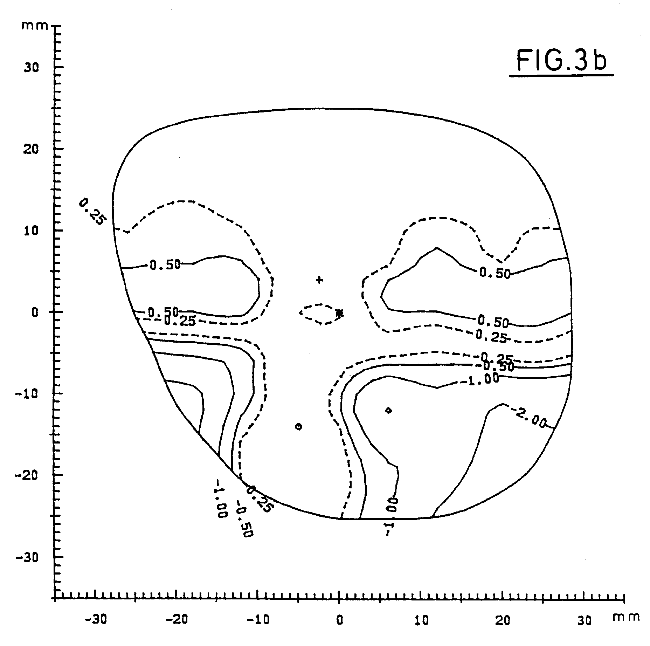

In Fig. 3a ist die astigmatische Abweichung und in Fig. 3b die sphärische Abweichung für eine Brillenlinse mit der Gleitsichtfläche gemäß Fig. 1, sphärischer Rezeptfläche und der Gebrauchssituation
sph 5.00 dpt, cyl 0.00 dpt, Addition 2.50 dpt, Rezeptprisma 0.00 cm/m
HSA 15.0 mm
Objektentfernungen 33 cm im Nahteil und unendlich im Fernteil
Vorneigung 9°
dargestellt. Die Mittendicke der Linse ist 6.4 mm und der Radius der sphärischen Rezeptfläche beträgt 172.57 mm. Die Gleitsichtfläche dieser Brillenlinse wurde genau mit dieser Rezeptfläche und für diese Gebrauchssituation optimiert, so daß die Figuren 3a und 3b den optimierten Ausgangsfall bzgl. der sphärischen und astigmatischen Abweichung für das erste Beispiel repräsentieren.

Verwendet man jetzt ein Halbfabrikat mit dieser Gleitsichtfläche für die geänderte Gebrauchssituation
sph 2.00 dpt, cyl 4.00 dpt, Achse 60°, Addition 2.50 dpt, Prisma 2.00 cm/m mit Basis 270°
HSA 15,0 mm
Objektentfernungen 33 cm im Nahteil und unendlich im Fernteil
Vorneigung 9°,
so benötigt man dafür nach dem Stand der Technik eine torische Rezeptfläche mit den Radien in den beiden Hauptschnitten von 230.10 mm und 91.17 mm. Die Mittendicke für diese Linse ist 8.0 mm.

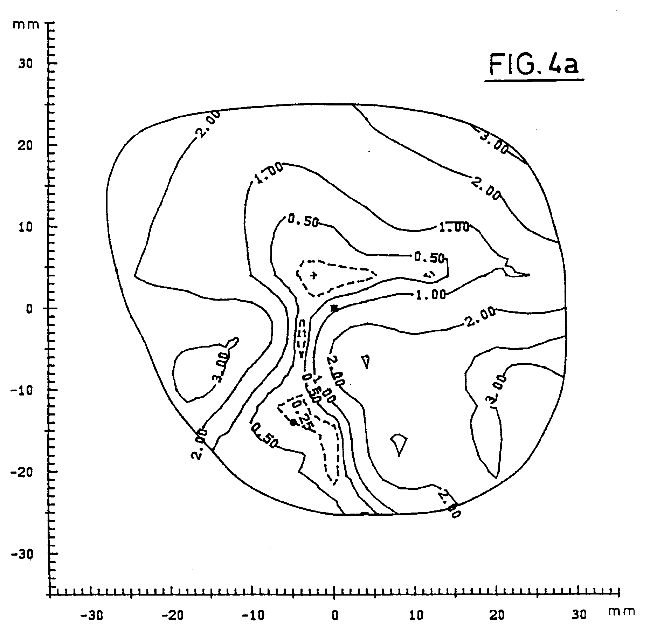

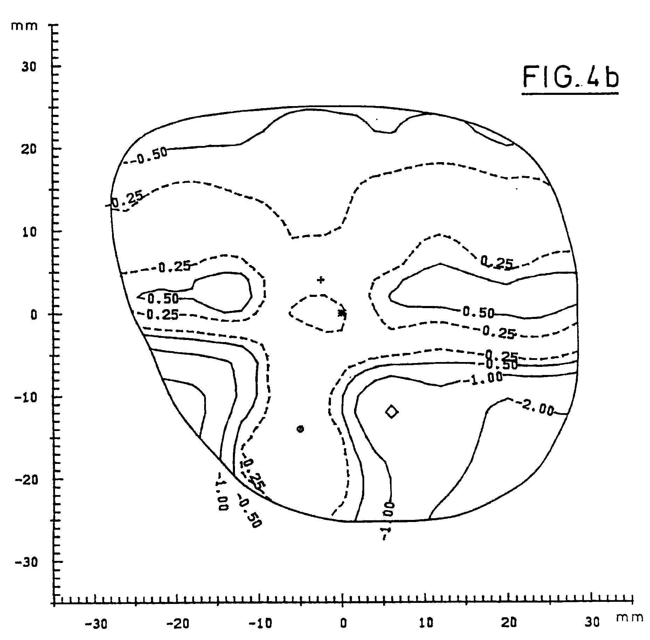

Die Fig. 4a und 4b zeigen die astigmatische und die sphärische Abweichung dieser Brillenlinse bei dieser Gebrauchssituation. Es ist deutlich zu sehen, daß sich für den Brillenträger im Vergleich zum optimierten Ausgangsfall eine starke Abweichung des Linienverlaufs und damit erheblich höhere Bildfehler außerhalb der Bezugspunkte ergeben. So hat sich z.B. der Bereich auf der Brillenlinse, für den der Brillenträger eine astigmatische Abweichung von höchstens 0.5 dpt in Kauf nehmen muß (Fig. 4a), im Vergleich zu dem beim optimierten Ausgangsfall (Fig. 3a), bedenklich verkleinert.

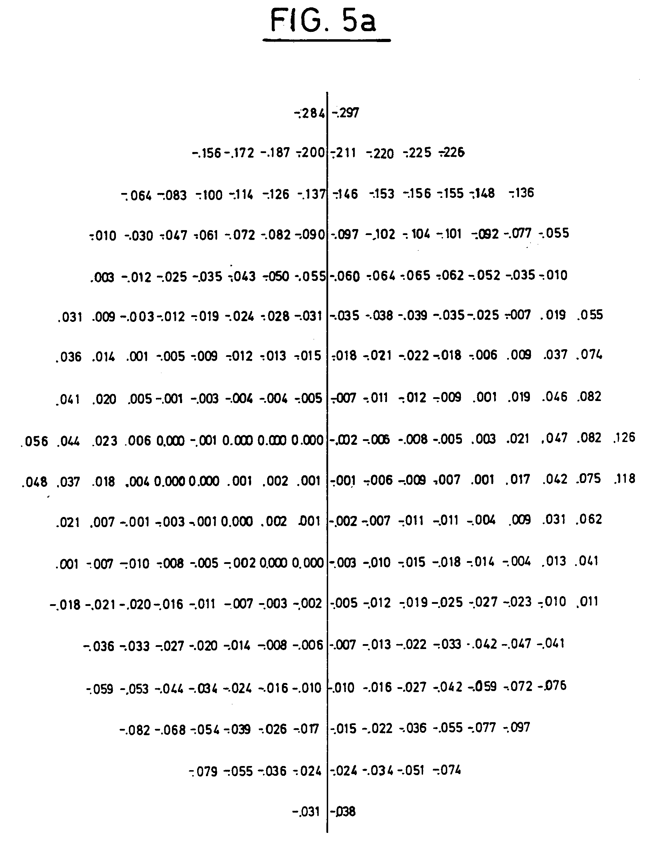

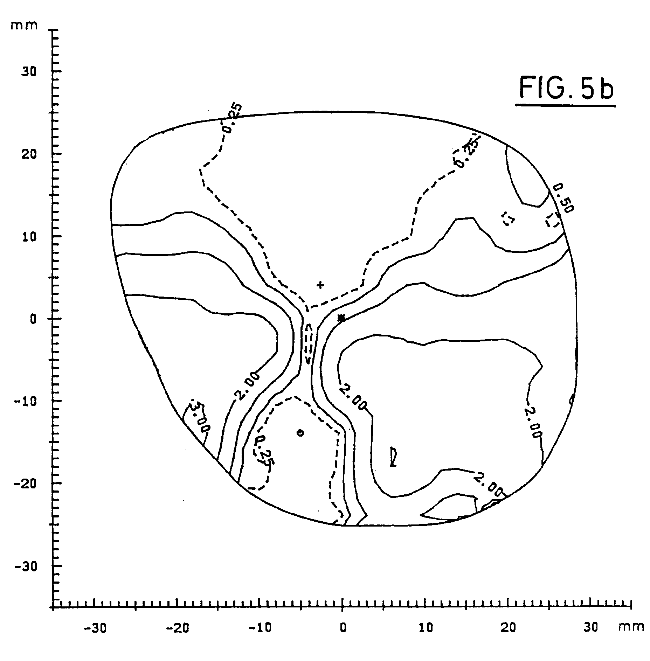

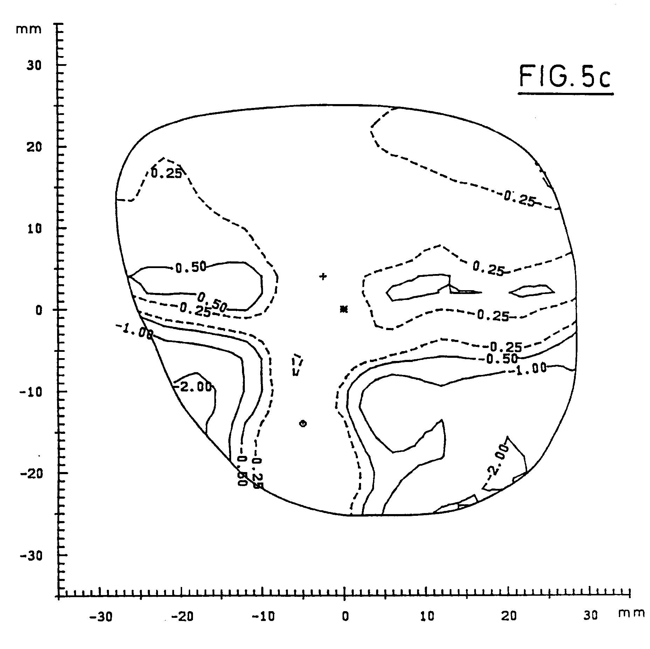

Eine erfindungsgemäße Veränderung der torischen Rezeptfläche dieser Brillenlinse führt zu den in Fig. 5a dargestellten Pfeilhöhenabweichungen der neuen asphärischen Rezeptfläche zur ursprünglichen torischen Rezeptfläche. Die Brillenlinse mit der so deformierten Rezeptfläche hat für den Brillenträger in der oben genannten Gebrauchssituation die in Fig. 5b und 5c gezeigten Bildfehler. Die astigmatische Abweichung (Fig. 5b) und die sphärische Abweichung (Fig. 5c) entsprechen in Größe und Verteilung denen des optimierten Ausgangsfalles (in Fig. 3a und 3b); d.h. mit einem Glas mit einer derartig deformierten Rezeptfläche lassen sich für diese neue Gebrauchssituation Güte und Design der ursprunglich für eine andere Gebrauchssituation optimierten Gleitsichtfläche voll erhalten.

Die Geometrie der erfindungsgemäß gestalteten Rezeptfläche ergibt sich durch Berechnung der Bildfehler über die gesamte Linse und der geeigneten Variation einer glatten parametrisierten Fläche, z.B. einer Spline-Fläche, mit Hilfe bekannter mathematischer Optimier-Algorithmen.

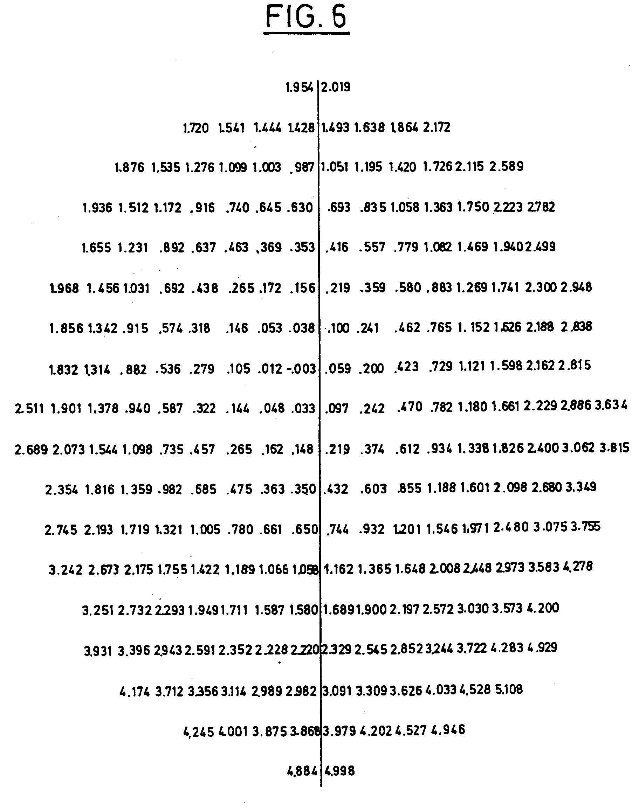

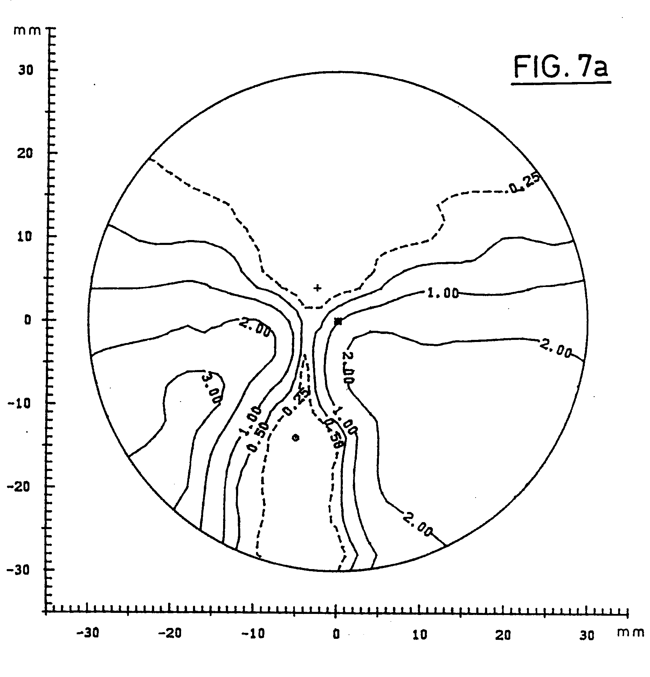

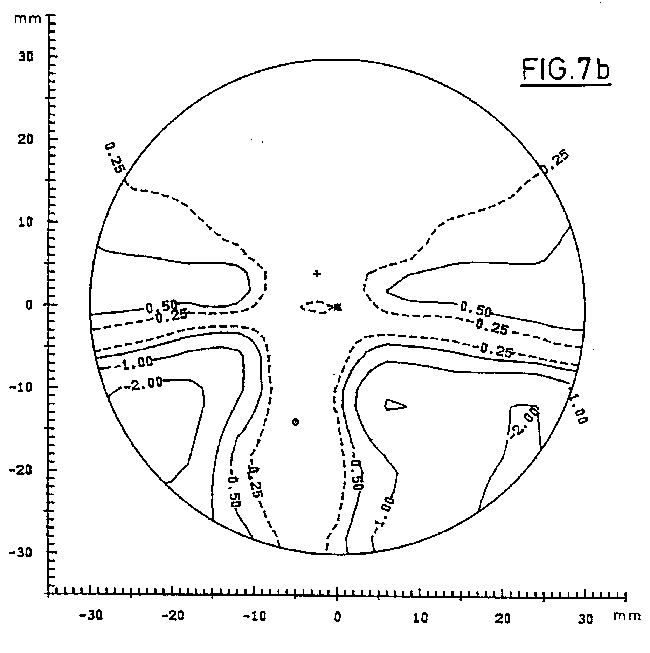

In der Fig. 6 ist eine Pfeilhöhantabelle der Gleitsichtvorderfläche angegeben, welche im nun folgenden zweiten Beispiel (Fig. 7a-9c) verwendet wird. Für eine Brillenlinse mit dieser Gleitsichtvorderfläche, einer sphärischen Rezeptfläche und der Gebrauchssituation
sph 0.00 dpt, cyl 0.00 dpt, Addition 2.50 dpt, Rezeptprisma 0.00 dpt
HSA 15.0 mm
Objektentfernungen 33 cm im Nahteil und unendlich im Fernteil
Vorneigung 9°
zeigt Fig. 7a die astigmatische Abweichung und Fig. 7b die sphärische Abweichung. Die Mittendicke beträgt 2.0 mm und der Radius der sphärischen Rezeptfläche ist 115.05 mm.

Fig. 7a und 7b zeigen also den optimierten Ausgangsfall bzgl. astigmatischer und sphärischer Abweichung des zweiten Beispieles.

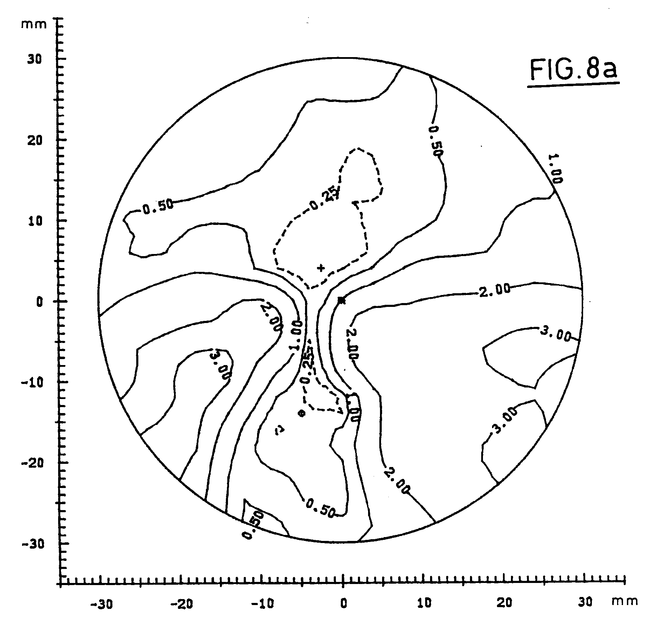

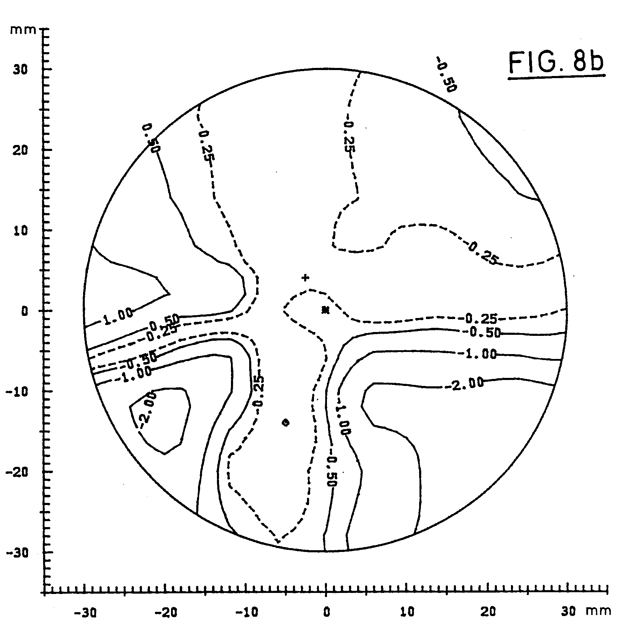

Wird jetzt die Gebrauchssituation hinsichtlich des Prismas verändert:
Rezeptprisma 6.00 cm/m mit Basis 0°,
so ergeben sich die Bildfehler sphärische und astigmatische Abweichung gem. Fig. 8a und 8b. Die Mittendicke bei diesem Glas ist dann 4.4 mm und die sphärische Rezeptfläche hat den Radius 112.37 mm. Gegenüber dem optimierten Ausgangsfall erkennt man wieder eine deutliche Erhöhung der beiden Bildfehler, obwohl lediglich ein durchaus gebräuchliches Rezeptprisma für dieses Beispiel verwendet wurde.

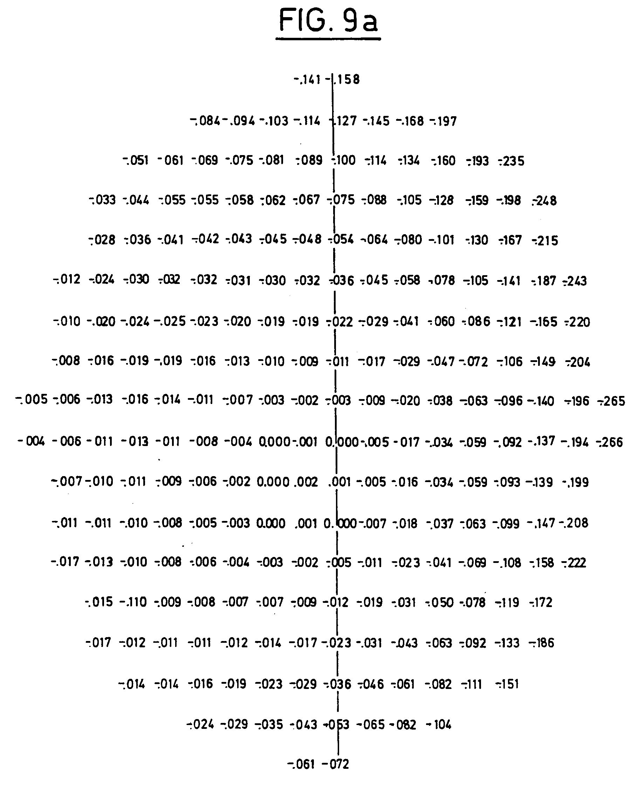

In Fig. 9a sind die Abweichungen in der Pfeilhöhe der erfindungsgemäßen Rezeptfläche zur sphärischen Rezeptfläche der Brillenlinse zu Fig. 8a und 8b tabelliert.

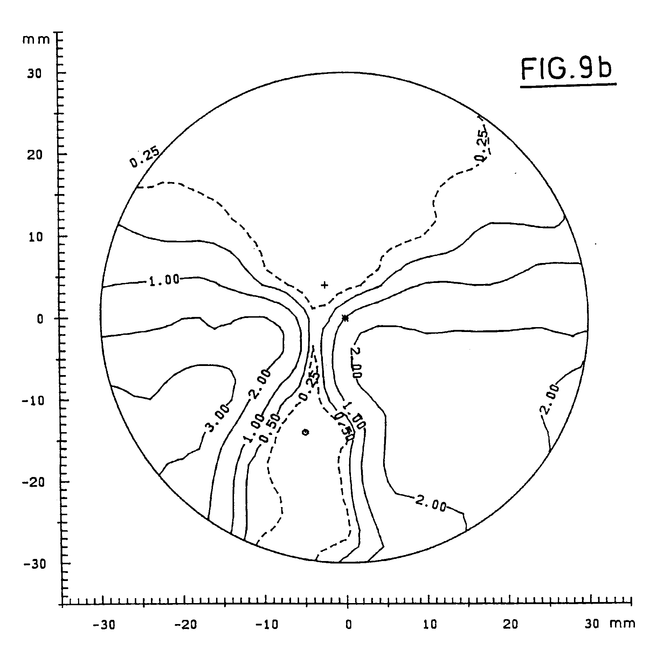

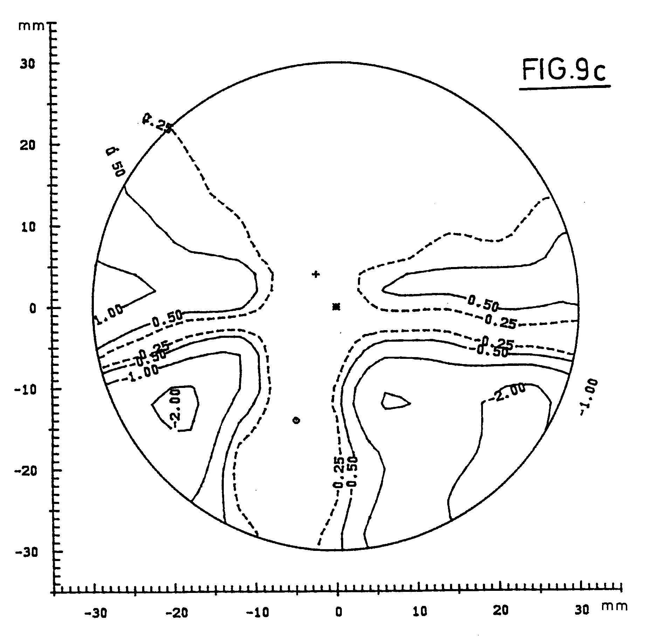

Die astigmatische und die sphärische Abweichung der mit einer so modifizierten Rezeptfläche versehenen Brillenlinse zeigen die Fig. 9b und 9c. Wie beim ersten Beispiel ergibt sich eine deutliche Verbesserung der Abbildungsgüte für den Brillenträger. Sie entspricht wiederum der des optimierten Ausgangsfalles.

## Patentansprüche

1. Brillenlinse mit einer Mehrstärkenfläche und einer Rezeptfläche, bei welcher die Mehrstärkenfläche so konzipiert ist, daß sich in Verbindung mit einer sphärischen oder torischen Rezeptfläche erste dioptrische Wirkungen in einem Fern- und einem Nahbezugspunkt ergeben und die sphärischen und astigmatischen Abweichungen von den ersten dioptrischen Wirkungen für erste Gebrauchsbedingungen über die gesamte Linse eine vorgegebenen Verteilung aufweisen, dadurch gekennzeichnet, daß die Rezeptfläche eine allgemeine asphärische Fläche ohne Punkt- und Achsensymmetrie ist, die so konzipiert ist, daß sich in Verbindung mit der Mehrstärkenfläche zweite, von den ersten dioptrischen Wirkungen abweichende dioptrische Wirkungen in dem Nah- und dem Fernbezugspunkt ergeben und die Verteilung der sphärischen und astigmatischen Abweichungen von diesen zweiten dioptrischen Wirkungen für zweite, von den ersten Gebrauchsbedingungen abweichende Gebrauchsbedingungen über die gesamte Linse der vorgegebenen Verteilung im wesentlichen entspricht.

2. Brillenlinse nach Anspruch 1, dadurch gekennzeichnet, daß die ersten und zweiten Gebrauchsbedingungen sich nur in den dioptrischen Wirkungen unterscheiden.

3. Brillenlinse nach Anspruch 1, dadurch gekennzeichnet, daß die ersten und zweiten Gebrauchsbedingungen den jeweils vorgesehenen Hornhautscheitelabstand enthalten.

4. Brillenlinse nach einem der Ansprüche 1 oder 3, dadurch gekennzeichnet, daß die ersten und zweiten Gebrauchsbedingungen die jeweils vorgesehene Vorneigung der Brillenfassung, für die die Brillenlinse bestimmt ist, enthalten.

5. Brillenlinse nach einem der Ansprüche 1, 3 oder 4, dadurch gekennzeichnet, daß die ersten und zweiten Gebrauchsbedingungen die jeweilige Fassungsform der Brillenfassung, für die die Brillenlinse bestimmt ist, enthalten.

6. Verfahren zur Herstellung einer Brillenlinse nach einem der Ansprüche 1 - 5 aus einem Halbfabrikat mit einer Mehrstärkenfläche, die so konzipiert ist, daß sich in Verbindung mit einer sphärischen oder torischen Rezeptfläche erste dioptrische Wirkungen in einem Fern- und einem Nahbezugspunkt ergeben und die sphärischen und astigmatischen Abweichungen von den ersten dioptrischen Wirkungen für erste Gebrauchsbedingungen über die gesamte Linse eine vorgegebene Verteilung aufweisen, dadurch gekennzeichnet, daß das Halbfabrikat mit einer Rezeptfläche allgemeiner asphärischer Form ohne Punkt- und Achsensymmetrie versehen wird, die so konzipiert ist, daß sich in Verbindung mit der Mehrstärkenfläche zweite, von den ersten dioptrischen Wirkungen abweichende dioptrische Wirkungen in dem Nah- und dem Fernbezugspunkt ergeben und die Verteilung der sphärischen und astigmatischen Abweichungen von diesen zweiten dioptrischen Wirkungen für zweite, von den ersten Gebrauchsbedingungen abweichende Gebrauchsbedingungen über die gesamte Linse der vorgegebenen Verteilung im wesentlichen entspricht.

7. Verfahren zur Herstellung einer Brillenlinse nach Anspruch 6, dadurch gekennzeichnet, daß sich die ersten und zweiten Gebrauchsbedingungen nur in den dioptrischen Wirkungen unterscheiden.

8. Verfahren zur Herstellung einer Brillenlinse nach Anspruch 6, dadurch gekennzeichnet, daß bei der Konzeption der Rezeptfläche der vorgesehene Hornhautscheitelabstand unter den zweiten Gebrauchsbedingungen berücksichtigt wird.

9. Verfahren zur Herstellung einer Brillenlinse nach einem der Ansprüche 6 oder 8, dadurch gekennzeichnet, daß bei der Konzeption der Rezeptfläche unter den zweiten Gebrauchsbedingungen die vorgesehene Vorneigung der Brillenfassung, für die die Brillenlinse bestimmt ist, berücksichtigt wird.

10. Verfahren zur Herstellung einer Brillenlinse nach einem der Ansprüche 6, 8 oder 9, dadurch gekennzeichnet, daß bei der Konzeption der Rezeptfläche unter den zweiten Gebrauchsbedingungen die Fassungsform der Brillenfassung, für die die Brillenlinse bestimmt ist, berücksichtigt wird.

## Claims

1. Spectacle lens having a multifocal surface and a prescription surface, in the case of which the multifocal surface is designed such that first dioptric effects are produced, in conjunction with a spherical or toroidal prescription surface, at a remote reference point and a near reference point, and the spherical and astigmatic deviations of the first dioptric effects have a prescribed distribution over the entire lens for first conditions of use, characterized in that the prescription surface is a general aspherical surface without point symmetry and axial symmetry, which is designed such that, in conjunction with the multifocal surface, second dioptric effects deviating from the first dioptric effects are produced at the near reference point and the remote reference point, and the distribution of the spherical and astigmatic deviations of these second dioptric effects essentially corresponds over the entire lens to the prescribed distribution for second conditions of use deviating from the first conditions of use.

2. Spectacle lens according to Claim 1, characterized in that the first and second conditions of use differ only in the dioptric effects.

3. Spectacle lens according to Claim 1, characterized in that the first and second conditions of use include the respectively provided corneal vertex distance.

4. Spectacle lens according to one of Claims 1 or 3, characterized in that the first and second conditions of use include the respectively provided forward lean of the spectacle frame for which the spectacle lens is intended.

5. Spectacle lens according to one of Claims 1, 3 or 4, characterized in that the first and second conditions of use include the respective shape of the spectacle frame for which the spectacle lens is intended.

6. Method for producing a spectacle lens according to one of Claims 1-5 from a semi-finished product having a multifocal surface which is designed such that first dioptric effects are produced, in conjunction with a spherical or toroidal prescription surface, at a remote reference point and a near reference point, and the spherical and astigmatic deviations of the first dioptric effects have a prescribed distribution over the entire lens for first conditions of use, characterized in that the semi-finished product is provided with a prescription surface of general aspherical shape without point symmetry and axial symmetry, which is designed such that, in conjunction with the multi focal surface, second dioptric effects deviating from the first dioptric effects are produced at the near reference point and the remote reference point, and the distribution of the spherical and astigmatic deviations of these second dioptric effects essentially corresponds over the entire lens to the prescribed distribution for second conditions of use deviating from the first conditions of use.

7. Method for producing a spectacle lens according to Claim 6, characterized in that the first and second conditions of use differ only in the dioptric effects.

8. Method for producing a spectacle lens according to Claim 6, characterized in that the envisaged corneal vertex distance is taken into account among the second conditions of use when designing the prescription surface.

9. Method for producing a spectacle lens according to one of Claims 6 or 8, characterized in that the envisaged forward lean of the spectacle frame for which the spectacle lens is intended is taken into account among the second conditions of use when designing the prescription surface.

10. Method for producing a spectacle lens according to one of Claims 6, 8 or 9, characterized in that the shape of the spectacle frame for which the spectacle lens is intended is taken into account among the second conditions of use when designing the prescription surface.

## Revendications

1. Verre de lunettes avec une surface multifocale et une surface prescrite, dans laquelle la surface multifocale est conçue d'une façon telle qu'en liaison avec une surface prescrite sphérique ou torique des premiers effets dioptriques se manifestent en un point de référence lointain et un point de référence proche et que les écarts sphériques et astigmatiques par rapport aux premiers effets dioptriques présentent pour des premières conditions d'utilisation une distribution prédéterminée sur tout le verre, caractérisé en ce que la surface prescrite est une surface asphérique générale sans symétrie ponctuelle et axiale, qui est conçue d'une façon telle qu'en liaison avec la surface multifocale, des seconds effets dioptriques, différents des premiers effets dioptriques, se manifestent au point de référence proche et au point de référence lointain et que la distribution des écarts sphériques et astigmatiques par rapport à ces seconds effets dioptriques corresponde sensiblement, pour des secondes conditions d'utilisation différentes des premières conditions d'utilisation, à la distribution prédéterminée sur tout le verre.

2. Verre de lunettes suivant la revendication 1, caractérisé en ce que les premières et les secondes conditions d'utilisation ne se différencient que dans les effets dioptriques.

3. Verre de lunettes suivant la revendication 1, caractérisé en ce que les premières et les secondes conditions d'utilisation comprennent la distance interpupillaire respectivement prévue.

4. Verre de lunettes suivant l'une des revendications 1 ou 3, caractérisé en ce que les premières et les secondes conditions d'utilisation comprennent l'inclinaison de la face respectivement prévue de la monture de lunettes, à laquelle le verre de lunettes est destiné.

5. Verre de lunettes suivant l'une des revendications 1, 3 ou 4, caractérisé en ce que les premières et les secondes conditions d'utilisation comprennent la forme respective de la monture de lunettes, à laquelle le verre de lunettes est destiné.

6. Procédé pour la fabrication d'un verre de lunettes suivant l'une quelconque des revendications 1 à 5 à partir d'un demi-produit avec une surface multifocale, qui est conçue d'une façon telle qu'en liaison avec une surface prescrite sphérique ou torique des premiers effets dioptriques se manifestent en un point de référence lointain et un point de référence proche et que les écarts sphériques et astigmatiques par rapport aux premiers effets dioptriques présentent pour des premières conditions d'utilisation une distribution prédéterminée sur tout le verre, caractérisé en ce que le demi-produit est pourvu d'une surface prescrite de forme générale asphérique sans symétrie ponctuelle et axiale, qui est conçue d'une façon telle qu'en liaison avec la surface multifocale, des seconds effets dioptriques, différents des premiers effets dioptriques, se manifestent au point de référence proche et au point de référence lointain et que la distribution des écarts sphériques et astigmatiques par rapport à ces seconds effets dioptriques corresponde sensiblement, pour des secondes conditions d'utilisation différentes des premières conditions d'utilisation, à la distribution prédéterminée sur tout le verre.

7. Procédé pour la fabrication d'un verre de lunettes suivant la revendication 6, caractérisé en ce que les premières et les secondes conditions d'utilisation ne se différencient que dans les effets dioptriques.

8. Procédé pour la fabrication d'un verre de lunettes suivant la revendication 6, caractérisé en ce que, lors de la conception de la surface prescrite, la distance inter-pupillaire prévue est prise en considération parmi les secondes conditions d'utilisation.

9. Procédé pour la fabrication d'un verre de lunettes suivant l'une des revendications 6 ou 8, caractérisé en ce que, lors de la conception de la surface de prescrite, l'inclinaison de la face de la monture, à laquelle le verre de lunettes est destiné, est prise en considération parmi les secondes conditions d'utilisation.

10. Procédé pour la fabrication d'un verre de lunettes suivant l'une des revendications 6, 8 ou 9, caractérisé en ce que, lors de la conception de la surface prescrite, la forme de la monture de lunettes, a laquelle le verre de lunettes est destiné, est prise en considération parmi les secondes conditions d'utilisation.
